# EUROPÄISCHE PATENTSCHRIFT

(11) **EP 0 653 615 B1**
(45) Veröffentlichungstag und Bekanntmachung des Hinweises auf die Patenterteilung: **17.06.1998**
(21) Anmeldenummer: 94115212.6
(22) Anmeldetag: 27.09.1994
(51) Int. Cl.: G01L 19/00

(54) **Ventilblockvorrichtung mit Schutzkasten und lageneutralen Befestigungsbohrungen**
Valve block assembly with protective box and position neutral fixing boreholes
Ensemble à bloc de vannes avec boîte de protection et trous de fixation à positions neutres

(30) Priorität: 12.10.1993 DE 9315444 U
(43) Veröffentlichungstag der Anmeldung: 17.05.1995
(73) Patentinhaber: Walter H. Haun Mess- und Regeltechnik, D-63857 Waldaschaff (DE)
(72) Erfinder: Haun, Walter H., D-63857 Waldaschaff (DE)
(74) Vertreter: Kern, Wolfgang, Dipl.-Ing.

(56) Entgegenhaltungen:
- GB-A- 2 022 397
- Seite 1 DIN 19 213 Teil 1 Februar 1976

## Beschreibung

Die Erfindung betrifft eine Ventilblockvorrichtung zur Messung von Drücken und Druckdifferenzen in Flüssigkeiten oder Gase führenden Rohrleitungen, bestehend aus einem Meßumformer mit Meßzelle und Elektronikteil und einem mit diesem verbundenen, mit Anschlußbohrungen für ein Prozeßfluid (Flüssigkeit oder Gas) sowie mit Befestigungsbohrungen versehenen Ventilblock, der zusammen mit dem Meßumformer in einem Schutzkasten angeordnet ist, dessen Wandung Durchgänge für in den Ventilblock führende Anschlußleitungen aufweist, an die im Inneren des Schutzkastens der Ventilblock über seine Anschlußbohrungen angeschlossen ist, wobei der Ventilblock mit wenigstens einem Ventilpaar zum Absperren der in ihn ein- und aus ihm austretenden Prozeßleitungen versehen ist.

Derartige Ventilblockvorrichtungen werden insbesondere in der chemischen Industrie, sonst aber überall dort, wo Prozeßfluids gefördert und verarbeitet werden, zu Meß- und Kontrollzwecken eingesetzt, um in verfahrenstechnischen Anlagen die Messung von Drucken und Druckdifferenzen in Rohrleitungen durchzuführen, in denen Flüssigkeiten oder Gase gefördert werden.

Die bisher bekannten Ventilblockvorrichtungen der genannten Art haben den Nachteil, daß sich ihre Ventilblöcke hinsichtlich der in ihnen befindlichen Anschlußbohrungen für das Prozeßfluid und der Befestigungsbohrungen, durch die der Ventilblock an der Wandung des Schutzkastens angebracht werden kann, nicht für an sich beliebige Einbauverhältnisse und Verwendung sowohl für gasförmige als auch für flüssige Medien eignen. Daher können bei den bekannten Ventilblockvorrichtungen die genannten Bohrungen im Ventilblock nicht an ganz bestimmten Stellen liegen, sondern müssen den Einbaugegebenheiten und Verwendungszwecken entsprechend jeweils anders angeordnet werden.

Die Aufgabe der Erfindung besteht deshalb darin, die Ventilblockvorrichtung so auszubilden, daß sie im Hinblick auf ihren Einbauzustand und die Art ihrer Verwendung wesentlich anpassungsfähiger ist als die herkömmlichen Vorrichtungen dieser Art. Diese Aufgabe wird erfindungsgemäß dadurch gelöst, daß die Anschlußbohrungen sowie die Befestigungsbohrungen, durch die der Ventilblock an der Wandung des Schutzkastens befestigt ist, so angeordnet sind, daß der Ventilblock unabhängig von der Anzahl der Anschlußbohrungen und davon, ob als Prozeßfluid eine Flüssigkeit oder ein Gas Verwendung findet, an stets die gleiche Lage aufweisende Durchgänge in der Schutzkastenwandung anschließbar ist.

Vorteilhafte Ausgestaltungen der Erfindung sind in den Unteransprüchen gekennzeichnet. Danach hat es sich bewährt, den Schutzkasten, der zweckmäßigerweise aus Kunststoffmaterial, beispielsweise Polyurethan, besteht, im Befestigungsbereich des Ventilblocks durch ein Blechprofil zu verstärken, an dem ein Montagekörper angebracht ist, der den Schutzkasten trägt.

Der Ventilblock selbst, der mit Ventilpaaren für das Prozeßfluid versehen ist, läßt sich gemäß einer weiteren Variante mit einem Druckausgleichsventil ausstatten, so daß zwischen den Anschlußbohrungen Druckausgleich herstellbar ist.

Gemäß einer weiteren Ausgestaltung der Erfindung ist der Ventilblock mit zwei Ventilpaaren und einem Ausgleichsventil sowie zwei Anschlußbohrungen für den Prozeßfluideingang und -ausgang, ferner zwei Entwässerungsbohrungen und zwei Befestigungsbohrungen versehen.

Gemäß einer anderen Ausgestaltung ist der Ventilblock mit zwei Anschlußbohrungen, die beide einen Prozeßfluideingang darstellen, einem Ausgleichsventil sowie zwei Befestigungsbohrungen versehen.

Eine weitere Ausgestaltung der Erfindung sieht vor, daß der Ventilblock zwei Anschlußbohrungen aufweist, von denen die eine einen Prozeßfluideingang und die andere einen Prozeßfluidausgang darstellt, ferner ein Ventilpaar sowie zwei Befestigungsbohrungen.

Da die Ventilblockvorrichtung sowohl für Flüssigkeiten als auch für Gase verwendbar sein soll, ist der Ventilblock im Falle der Verwendung für Flüssigkeiten an der Wandung bzw. dem Blechprofil zweckmäßigerweise so befestigt, daß der mit ihm verbundene Meßumformer in der Montagestellung des Schutzkastens unterhalb des Ventilblocks liegt, während er bei Verwendung für Gase so angeordnet ist, daß der mit ihm verbundene Meßumformer in der Montagestellung des Schutzkastens oberhalb des Ventilblocks liegt. Schließlich hat es sich auch bewährt, für den Fall der Beheizung des Ventilblocks in diesem eine Bohrung vorzusehen, in die eine Heizpatrone eingesetzt werden kann.

Die Erfindung wird nachfolgend an Hand der in der Zeichnung dargestellten Ausführungsbeispiele näher erläutert.

In der Zeichnung zeigen:
- **Fig. 1**: eine schematische, teilweise geschnittenen Frontansicht eines Schutzkastens mit eingebauter Ventilblockvorrichtung zum Einsatz für Flüssigkeiten;
- **Fig. 2**: eine Seitenansicht der Anordnung von Fig. 1;
- **Fig. 3**: eine schematische, teilweise geschnittene Frontansicht eines Schutzkastens mit eingebauter Ventilblockvorrichtung zur Verwendung für Gase;
- **Fig. 4**: eine Seitenansicht der Anordnung von Fig. 3;
- **Fig. 5**: eine der Fig. 1 entsprechende Frontansicht eines Schutzkastens mit eingebauter Ventilblockvorrichtung und Anschlußleitungen für die Prozeßflüssigkeit;
- **Fig. 6**: eine Seitenansicht der Anordnung von Fig. 5;
- **Fig. 7a, 7b und 7c**: schematische Darstellungen in Frontansicht, Seitenansicht und Draufsicht eines Ventilblocks mit einem Prozeßfluideingang und einem Prozeßfluidausgang sowie einem Ventilpaar;
- **Fig. 8a, 8b, und 8c**: eine schematische Darstellung einer Frontansicht, Seitenansicht und Draufsicht eines Ventilblocks mit zwei Prozeßfluideingängen, einem Ventilpaar und einem Druckausgleichsventil; und
- **Fig. 9a, 9b und 9c**: eine schematische Frontansicht, Seitenansicht und Draufsicht eines Ventilblocks mit zwei Prozeßfluidanschlüssen, zwei Entwässerungsanschlüssen, zwei Ventilpaaren und einem Druckausgleichsventil.

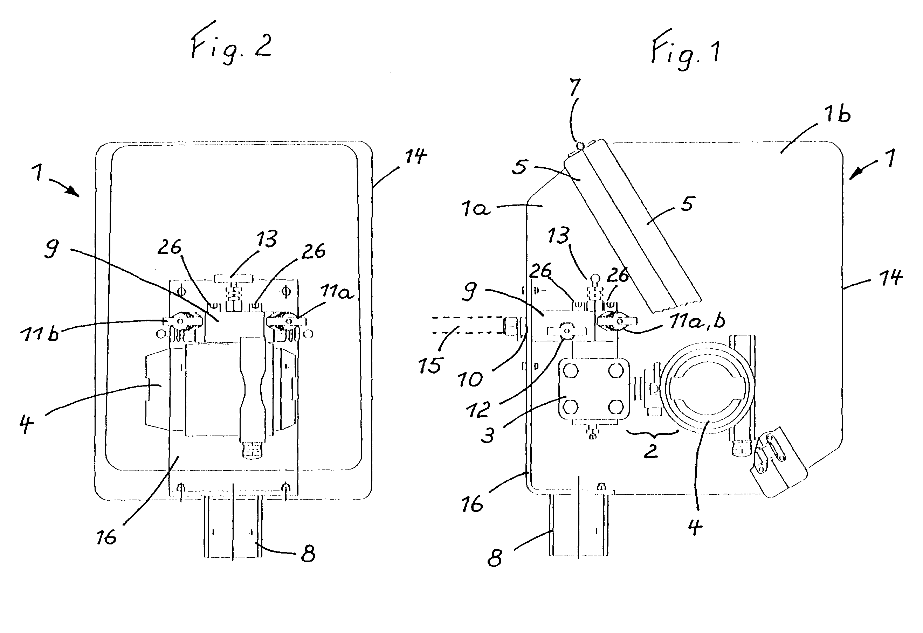

Die in **Fig. 1** dargestellte Ventilblockvorrichtung weist in einem Schutzkasten 1 aus Polyurethan einen Ventilblock 9 auf, an dessen Unterseite die Meßzelle 3 eines Meßumformers 2 hängend befestigt ist, zu dem der Elektronikteil 4 gehört. Der Ventilblock 9 dient zur Messung von Drücken und Druckdifferenzen einer Prozeßflüssigkeit, die über Leitungen 15 und Durchgänge 10 in der Wandung 14 des Schutzkastens 1 dem Ventilblock zugeführt wird bzw. aus ihm ausströmt.

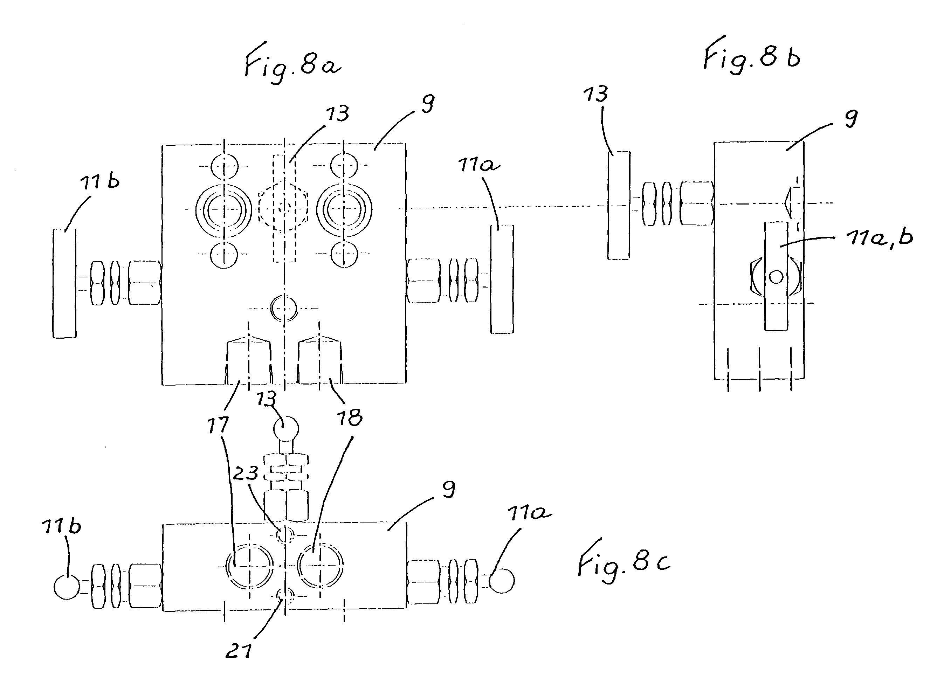

Zu diesem Zweck weist der Ventilblock 9, der an der Wandung 14 mit Hilfe eines Blechprofils 16 befestigt ist, das zur Verstärkung der Schutzkastenwand dient und an dem ein Montagekörper 8 zur Halterung des Schutzkastens befestigt ist, ein Ventilpaar 11a, 11b, zwei Anschlußbohrungen 17, 18 für die Prozeßflüssigkeit, ein Druckausgleichsventil 13 und zwei Befestigungsbohrungen 21, 23 auf, die die aus den **Fig. 8a, 8b und 8c** entnehmbare Lage im Ventilblock 9 besitzen. Außerdem ist der Ventilblock 9 mit einer Belüftungsschraube 12 versehen.

Der Schutzkasten 1 ist längs zweier sich in etwa diagonal erstreckender Randflansche 5 zweigeteilt, nämlich in einen am Montagekörper 8 bzw. dem Blechprofil 16 angebrachten feststehenden Teil 1a und einen mit Hilfe eines Scharniers 7 in bezug auf den feststehenden Teil verschwenkbaren, beweglichen Teil 1b, der eine Deckelhaube darstellt, so daß die im feststehenden Teil 1a angeordnete Ventilvorrichtung zugänglich wird.

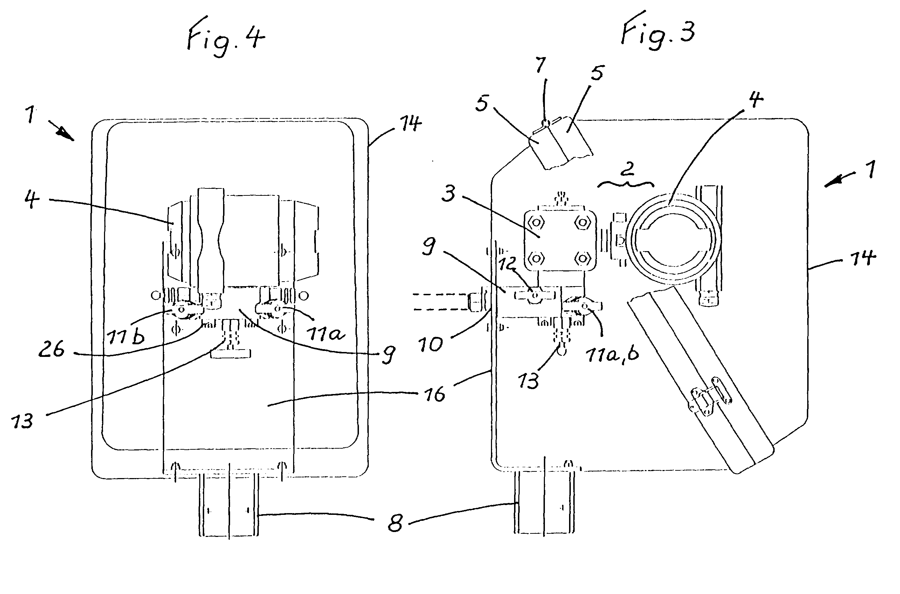

Die in den **Fig. 3 und 4** dargestellte Ventilblockvorrichtung entspricht in ihrem grundsätzlichen Aufbau der Vorrichtung der Fig. 1 und 2, ist jedoch im Gegensatz zu letzterer für den Einsatz für Gase vorgesehen, weshalb der Ventilblock 9 zwar ebenfalls an der Wandung 14 des Schutzkastens 1 angebracht ist, jedoch den mit ihm verbundenen Meßumformer 2 auf seiner Oberseite trägt. Dies bedeutet, daß der Ventilblock 9 praktisch gegenüber der in den **Fig. 1 und 2** gezeigten Anordnung um 180° gedreht ist, ansonsten aber keinerlei Veränderungen hinsichtlich der Lage und Anordnung der verwendeten Ventile, Anschlußbohrungen für das Prozeßfluid und die Befestigungsbohrungen erfahren hat.

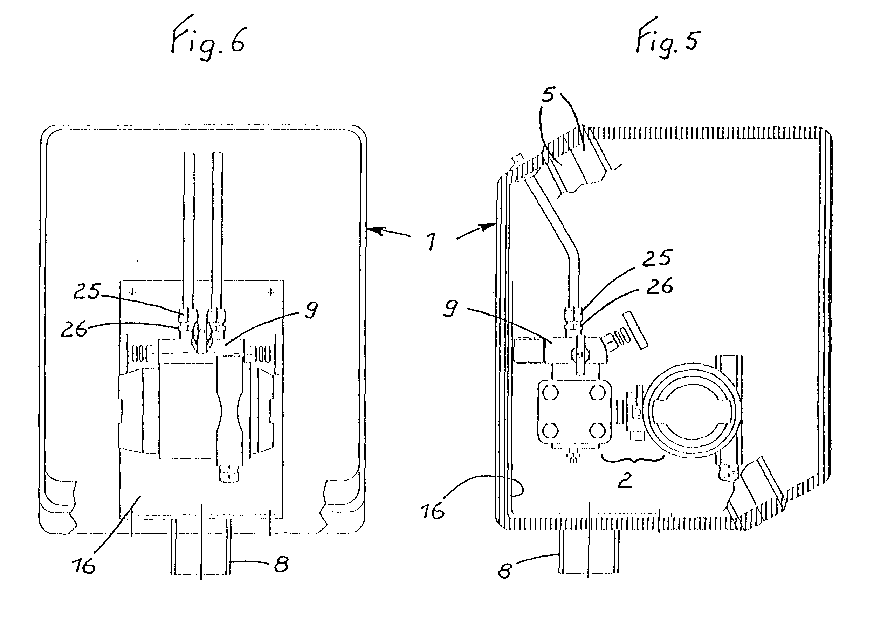

Die in den **Fig. 5 und 6** dargestellte Ausgestaltung der Ventilblockvorrichtung, die, wie die Vorrichtung nach den **Fig. 1 und 2** für Prozeßflüssigkeiten geeignet ist, zeigt beispielshalber die Wandstärke des Schutzkastens 1 für den Fall einer zusätzlichen Isolierung sowie den Verlauf der Prozeßfluidleitungen innerhalb des Schutzkastens und deren Durchtritt durch die Schutzkastenwandung sowie deren Anschluß mittels üblicher Anschlußnippel 25 an den dafür am Ventilblock vorgesehen Eingängen 26.

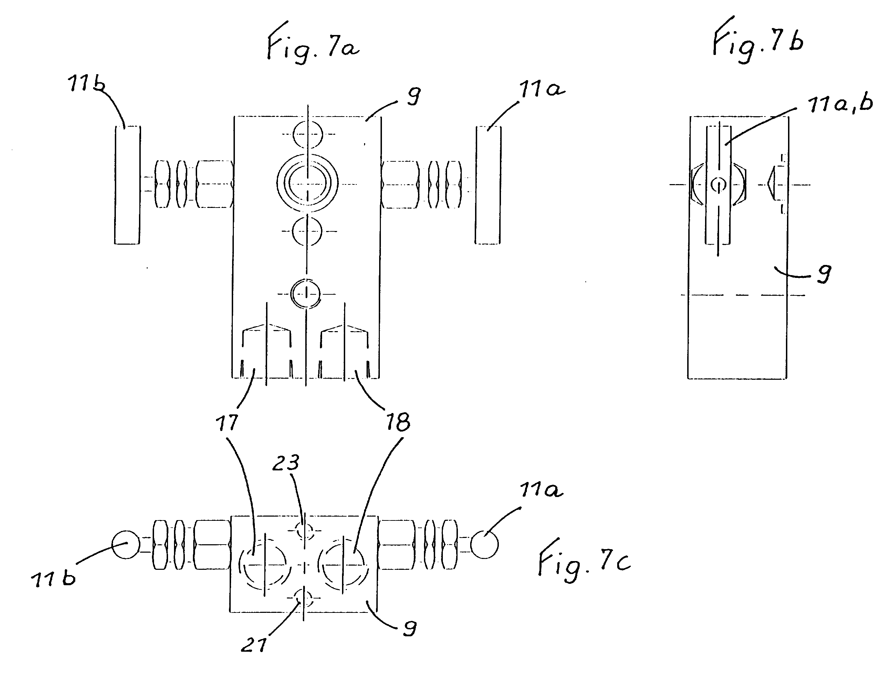

Für den Fall, daß der Ventilblock nur mit einem Prozeßfluideingang 17, einem Ausgang 18, einem Ventilpaar 11a, 11b sowie zwei Befestigungsbohrungen 21, 23 versehen ist, also kein Druckausgleichsventil aufweist, hat er die in den **Fig. 7a, 7b, 7c** dargestellte Konfiguration, die, wie der oben beschriebene Ventilblock gemäß den **Fig. 8a, 8b und 8c**, ohne Änderung der Lage seiner Anschlußbohrungen und Befestigungsbohrungen im Schutzkasten 1 Verwendung finden kann, und zwar sowohl für Flüssigkeiten als auch für Gase, wobei jeweils nur die Anordnung des Meßumformers 2 zu berücksichtigen ist, nämlich aus der hängenden (**Fig. 1 und 2**) in die stehende (**Fig. 3 und 4**) Lage.

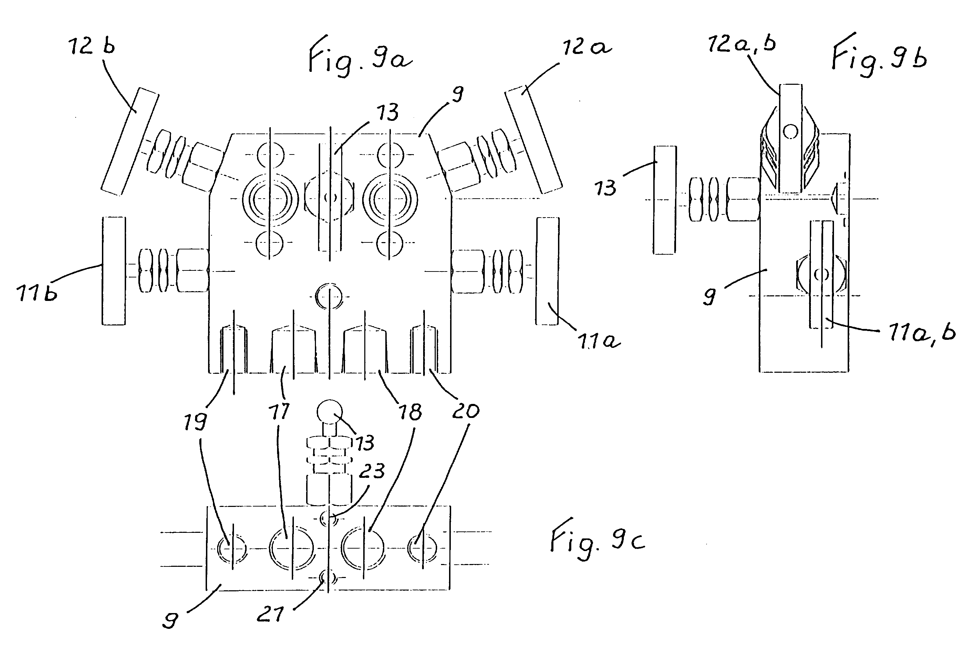

Für den Fall, daß der Ventilblock zwei Prozeßfluidanschlüsse 17, 18, zwei Entwässerungsanschlüsse 19, 20 sowie zwei Ventilpaare 11a, 11b, 12a, 12b sowie ein Druckausgleichsventil 13 aufweist, wie dies in den **Fig. 9a, 9b und 9c** dargestellt ist, ändert sich die Anschlußsituation eines solchen Blocks im Schutzkasten 1 gegenüber den im obigen erläuterten Anschlußsituationen der anderen Ventilblöcke ebenfalls nicht, da die Anschlußbohrungen 17, 18 und Befestigungsbohrungen 21, 22 ihrer Lage nach denjenigen der anderen Ventilblöcke entsprechen, wodurch eine konstruktive Anpassung des Ventilblocks bezüglich seiner Anschlüsse und Befestigungen an sich ändernde Verwendungszwecke und Einbauverhältnisse vermieden wird und somit eine kostengünstigere Fertigung und Montage erreicht wird.

Es hat sich als besonders vorteilhaft erwiesen, den Schutzkasten 1 aus Polyurethan anzufertigen und darüber hinaus in der Schutzkastenwand auf der inneren Oberfläche Nuten auszubilden, die die Heizkabel aufnehmen und daher als Kabelkanal dienen.

## Patentansprüche

1. Ventilblockvorrichtung zur Messung von Drücken und Druckdifferenzen in Flüssigkeiten oder Gase führenden Rohrleitungen, bestehend aus einem Meßumformer (2) mit Meßzelle (3) und Elektronikteil (4) und einem mit diesem verbundenen, mit Anschlußbohrungen (17, 18) für ein Prozeßfluid (Flüssigkeit oder Gas) sowie mit Befestigungsbohrungen (21, 23) versehenen Ventilblock (9), der zusammen mit dem Meßumformer in einem Schutzkasten (1) angeordnet ist, dessen Wandung Durchgänge (10) für in den Ventilblock führende Anschlußleitungen aufweist, an die im Inneren des Schutzkastens der Ventilblock über seine Anschlußbohrungen (17, 18) angeschlossen ist, wobei der Ventilblock mit wenigstens einem Ventilpaar (11a, b; 12a, b) zum Absperren der in ihn ein- und aus ihm austretenden Prozeßleitungen versehen ist, **dadurch gekennzeichnet, daß** die Anschlußbohrungen (17, 18) sowie die Befestigungsbohrungen (21, 23), durch die der Ventilblock (9) an der Wandung (14) des Schutzkastens (1) befestigt ist, so angeordnet sind, daß der Ventilblock unabhängig von der Anzahl der Anschlußbohrungen und davon, ob als Prozeßfluid eine Flüssigkeit oder ein Gas Verwendung findet, an stets die gleiche Lage aufweisende Durchgänge (10) in der Schutzkastenwandung (14) anschließbar ist.

2. Ventilblockvorrichtung nach Anspruch 1, **dadurch gekennzeichnet**, daß die Wandung (14) des Schutzkastens (1) im Befestigungsbereich des Ventilblocks (9) durch ein Blechprofil (16) verstärkt ist.

3. Ventilblockvorrichtung nach Anspruch 2, **dadurch gekennzeichnet**, daß das Blechprofil (16) mit einem Montagekörper (8) verbunden ist.

4. Ventilblockvorrichtung nach einem der Ansprüche 1 bis 3, **dadurch gekennzeichnet**, daß zusätzlich zu den Ventilpaaren (11a, 11b; 12a, 12b) für das Prozeßfluid der Ventilblock (9) ein Druckausgleichsventil (13) aufweist, mit dem zwischen den Anschlußbohrungen (17, 18) Druckausgleich herstellbar ist.

5. Ventilblockvorrichtung nach einem der Ansprüche 1 bis 4, **dadurch gekennzeichnet**, daß zusätzlich zu den Anschlußbohrungen (17, 18) als Eingänge für das Prozeßfluid in den Ventilblock (9) Ausgangsbohrungen (19, 20) für das Prozeßfluid im Ventilblock vorgesehen sind.

6. Ventilblockvorrichtung, **dadurch gekennzeichnet**, daß der Ventilblock (9) wenigstens eine Bohrung (22) zur Aufnahme einer elektrischen Heizung aufweist.

7. Ventilblockvorrichtung nach einem der Ansprüche 1 bis 6, **dadurch gekennzeichnet**, daß der Ventilblock (9) mit zwei Ventilpaaren (11a, 11b; 12a, 12b) und einem Ausgleichsventil (13) sowie zwei Anschlußbohrungen (17, 18) für den Prozeßfluideingang, zwei Ausgangsbohrungen (19, 20) für den Prozeßfluidausgang und zwei Befestigungsbohrungen (21, 23) versehen ist.

8. Ventilblockvorrichtung nach einem der Ansprüche 1 bis 6, **dadurch gekennzeichnet**, daß der Ventilblock (9) mit zwei Anschlußbohrungen (17, 18), die beide einen Prozeßfluideingang darstellen, einem Ausgleichsventil (13) sowie zwei Befestigungsbohrungen (21, 23) versehen ist.

9. Ventilblockvorrichtung nach einem der Ansprüche 1 bis 6, **dadurch gekennzeichnet**, daß der Ventilblock (9) mit zwei Anschlußbohrungen (17, 18) versehen ist, von denen die eine einen Prozeßfluideingang und die andere einen Prozeßfluidausgang darstellt, ferner mit einem Ventilpaar (11a, 11b) sowie zwei Befestigungsbohrungen (21, 23).

10. Ventilblockvorrichtung nach einem der Ansprüche 1 bis 9, **dadurch gekennzeichnet**, daß im Falle der Verwendung der Ventilblockvorrichtung für Flüssigkeiten der Ventilblock (9) an der Wandung (14) bzw.dem Blechprofil (16) so befestigt ist, daß der mit ihm verbundene Meßumformer (2) in der Montagestellung des Schutzkastens (1) unterhalb des Ventilblocks angeordnet ist.

11. Ventilblockvorrichtung nach einem der Ansprüche 1 bis 9, **dadurch gekennzeichnet**, daß bei Verwendung der Ventilblockvorrichtung für Gase der Ventilblock (9) an der Wandung (14) bzw. dem Blechprofil (16) des Schutzkastens (1) so angeordnet ist, daß der mit ihm verbundene Meßumformer (2) in der Montagestellung des Schutzkastens (1) oberhalb des Ventilblocks liegt.

12. Ventilblockvorrichtung nach einem der Ansprüche 1 bis 11, **dadurch gekennzeichnet**, daß der Schutzkasten (1) aus Polyurethan besteht.

13. Ventilblockvorrichtung nach einem der Ansprüche 1 bis 12, **dadurch gekennzeichnet**, daß in der Wand des Schutzkastens (1) auf der inneren Oberfläche Nuten zur Aufnahme von Heizkabeln ausgebildet sind.

## Claims

1. Valve block assembly for the measurement of pressures and pressure differences in pipelines transporting liquids or gases, comprising a measuring transducer (2) having a measuring device (3) and an electronic part (4) and a valve block (9) connected thereto and provided with connecting bore holes (17, 18) for a processing fluid (liquid or gas) as well as with fixing bore holes (21, 23), which valve block is arranged together with the measuring transducer within a protective box (1) the walls thereof are provided with apertures (10) for connecting tubes leading into the valve block and joint within the protective block to the valve block through its connecting bore holes (17, 18), the construction being such that the valve block is provided with at least one pair of valves (11a, b; 12a, b) for cutting off the processing pipes entering and leaving the valve block, **characterized in that** the connecting bore holes (17, 18) as well as the fixing bore holes (21, 23) by which the valve block (9) is attached to the wall (14) ofthe protective box (1) are arranged such that the valve block can be connected independently from the number of the connecting bore holes as well as whether as processing fluid a liquid or a gas is used, with apertures (10) having always the same position in the wall (14) ofthe protective box.

2. Valve block assembly according to claim 1, **characterized in that** the wall (14) of the protective box (1) is reinforced by a plate profile (16) in the attachment area of the valve block (9).

3. Valve block assembly according to claim 2, **characterized in that** the plate profile (16) is joint to a mounting body (8).

4. Valve block assembly according to one of the claims 1 - 3, **characterized in that** in addition to the pairs of valve (11a, 11b; 12a, 12b) for the processing fluid the valve block (9) is provided with a pressure balancing valve (13), by which a pressure balance between the connecting bore holes (17, 18) can be established between the connecting bore holes (17, 18).

5. Valve block assembly according to one of the claims 1 - 4, **charcterized in that** in addition to the connecting bore holes (17, 18) as entrances for the processing fluid into the valve block (9) exit bore holes (19, 20) for the processing fluid are provided in the valve block.

6. Valve block assembly, **characterized in that** the valve block (9) is provided with at least one bore hole (22) for the reception of an electric heating.

7. Valve block assembly according to one of the claims 1 - 6, **characterized in that** the valve block (9) is provided with two pairs of valves (11a, 11b; 12a, 12b) and a balancing valve (13) as well as two connecting bore holes (17, 18) for the processing fluid input, two exit bore holes (19, 20) for the processing fluid output and two fixing bore holes (21, 23).

8. Valve block assembly according to one of the claims 1 - 6, **characterized in that** the valve block (9) is provided with two connecting bore holes (17, 18) forming both a processing fluid input, a balancing valve (13) as well as two connecting bore holes (21, 23).

9. Valve block assembly according to one of the claims 1 - 6, **characterized in that** the valve block (9) is provided with two connecting bore holes (17, 18) the first one being a processing fluid input and the other one a processing fluid output, moreover with a pair of valves (11a, 11b) as well as two fixing bore holes (21, 23).

10. Valve block assembly according to one of the claims 1 - 9, **characterized in that** in case the valve block assembly is used for liquids the valve block (9) is fastened to the bore (14) or the plate profile (16), respectively, such that the meaasuring transducer (2) fixed thereto is positioned in the mounting position of the protective box (1) below the valve block.

11. Valve block assembly according to one of the claims 1 - 9, **characterized in that** in case the valve block assembly is used for gases the valve block (9) is positioned on the wall (14) or the plate profile (16), respectively, ofthe protective box (1) such that the measuring transducer (2) fixed thereto is arranged in the mounting position of the protective box (1) above the valve block.

12. Valve block assembly according to one of the claims 1 - 11, **characterized in that** the protective box (1) is made of polyurethane.

13. Valve block assembly according to one of the claims 1 - 12, **characterized in that** grooves are formed on the inner surface of the wall of the protective box (1) for the reception of heating cables.

## Revendications

1. Dispositif à bloc de vannes pour la mesure de pressions et de différences de pression dans des tuyauteries transportant des liquides ou des gaz, constitué d'un convertisseur de mesure (2) avec cellule de mesure (3) et partie électronique (4) et avec un bloc de vannes (9) relié à celle-ci, pourvu de perçages de raccord (17, 18), pour un fluide de processus (liquide ou gaz) ainsi que de perçages de fixation (21, 23), lequel bloc de vannes est disposé avec le convertisseur de mesure dans une boîte de protection (1), dont la paroi présente des passages (10) pour des conduites de raccord menant au bloc de vannes, auxquelles le bloc de vannes est raccordé, à l'intérieur de la boîte de protection par ses perçages de raccord (17, 18), le bloc de vannes étant pourvu d'au moins une paire de vannes (11a, b ; 12a, b) pour la fermeture des conduites de processus entrant dans celui-ci et en sortant, caractérisé en ce que les perçages de raccord (17, 18) ainsi que les perçages de fixation (21, 23), par lesquels le bloc de vannes (9) est fixé sur la paroi (14) de la boîte de protection (1), sont disposés de manière que le bloc de vannes puisse être raccordé aux passages (10) présentant toujours la même position, dans la paroi (14) de la boîte de protection, indépendamment du nombre de perçages de raccord et du fait que l'on utilise comme fluide de processus un liquide ou un gaz.

2. Dispositif à bloc de vannes selon la revendication 1, caractérisé en ce que la paroi (14) de la boîte de protection (1) est renforcée dans la zone de fixation du bloc de vannes (9) par un profilé en tôle (16).

3. Dispositif à bloc de vannes selon la revendication 2, caractérisé en ce que le profilé en tole (16) est relié à un corps de montage (8).

4. Dispositif à bloc de vannes selon l'une des revendications 1 à 3, caractérisé en ce qu'en supplément aux paires de vannes (11a, 11b ; 12a, 12b) pour le fluide de processus, le bloc de vannes (9) présente une soupape d'équilibrage de pression (13), avec laquelle il est possible d'équilibrer la pression entre les perçages de raccord (17, 18).

5. Dispositif à bloc de vannes selon l'une des revendications 1 à 4, caractérisé en ce qu'en supplément aux perçages de raccord (17, 18) servant d'entrées au fluide de processus dans le bloc de vannes (9), il est prévu dans le bloc de vannes des perçages de sorties (19, 20) pour le fluide de processus.

6. Dispositif à bloc de vannes selon l'une des revendications 1 à 5, caractérisé en ce que le bloc de vannes (9) présente au moins un perçage (22) destiné à recevoir un chauffage électrique.

7. Dispositif à bloc de vannes selon l'une des revendications 1 à 6, caractérisé en ce que le bloc de vannes (9), est pourvu de deux paires de vannes (11a, 11b ; 12a, 12b) et d'une soupape d'équilibrage (13) ainsi que de deux perçages de raccord (17, 18) pour l'entrée du fluide de processus, de deux perçages de sortie (19, 20) pour la sortie du fluide de processus et de deux perçages de fixation (21, 23).

8. Dispositif à bloc de vannes selon l'une des revendications 1 à 6, caractérisé en ce que le bloc de vannes (9) est pourvu de deux perçages de raccord (17, 18), qui constituent tous deux une entrée de fluide de processus, d'une soupape d'équilibrage (13) ainsi que de deux perçages de fixation (21, 23).

9. Dispositif à bloc de vannes selon l'une des revendications 1 à 6, caractérisé en ce que le bloc de vannes (9) est pourvu de deux perçages de raccord (17, 18), dont un constitue une entrée de fluide de processus et l'autre, une sortie de fluide de processus, ainsi que d'une paire de vannes (11a, 11b) et de deux perçages de fixation (21, 23).

10. Dispositif à bloc de vannes selon l'une des revendications 1 à 9, caractérisé en ce que dans le cas de l'utilisation du dispositif à bloc de vannes pour des liquides, le bloc de vannes (9) est fixé sur la paroi (14) ou sur le profilé en tôle (16) de manière que le convertisseur de mesure (2), relié à celui-ci, se trouve dans la position de montage de la boîte de protection (1), au-dessous du bloc de vannes.

11. Dispositif à bloc de vannes selon l'une des revendications 1 à 9, caractérisé en ce que dans le cas où le dispositif à bloc de vannes est utilisé pour des gaz, le bloc de vannes (9) est disposé sur la paroi (14) ou sur le profilé en tôle (16) de la boîte de protection (1), de manière que le convertisseur de mesure (2) relié à celui-ci, se trouve au-dessus du bloc de vannes, dans la position de montage de la boîte de protection (1).

12. Dispositif à bloc de vannes selon l'une des revendications 1 à 11, caractérisé en ce que la boîte de protection (1) est en polyuréthane.

13. Dispositif à bloc de vannes selon l'une des revendications 1 à 12, caractérisé en ce que dans la paroi de la boîte de protection (1) des rainures sont formées sur la surface intérieure, pour recevoir des câbles de chauffage.
